(19) Europäisches Patentamt
European Patent Office
Office européen des brevets

(11) **EP 4 435 465 A1**

(12) **DEMANDE DE BREVET EUROPEEN**

(43) Date de publication:
**25.09.2024 Bulletin 2024/39**

(21) Numéro de dépôt: **23305384.2**

(22) Date de dépôt: **21.03.2023**

(51) Classification Internationale des Brevets (IPC):
**G01S 7/02** (2006.01)     **G01S 7/292** (2006.01)

(52) Classification Coopérative des Brevets (CPC):
**G01S 7/021; G01S 7/2923**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(71) Demandeurs:
• **BULL SAS**
**78340 Les Clayes-Sous-Bois (FR)**
• **CentraleSupélec**
**91190 Gif-sur-Yvette (FR)**
• **Centre National de la Recherche Scientifique**
**75016 Paris (FR)**
• **Université Paris-Saclay**
**91190 Gif-sur-Yvette (FR)**

(72) Inventeurs:
• **MOTTIER, Manon**
**75014 PARIS (FR)**
• **PASCAL, Frédéric**
**94200 IVRY-SUR-SEINE (FR)**
• **CHARDON, Gilles**
**91120 PALAISEAU (FR)**

(74) Mandataire: **IPAZ**
**Bâtiment Platon**
**Parc Les Algorithmes**
**91190 Saint-Aubin (FR)**

(54) **PROCÉDÉ D'IDENTIFICATION D'UN ÉMETTEUR RADAR ET SYSTÈME D'IDENTIFICATION ASSOCIÉ**

(57) L'invention concerne un procédé d'identification d'un émetteur radar, à partir d'un ensemble d'impulsions reçues correspondantes, chacune associée à un instant d'arrivée respectif,

le procédé étant mis en oeuvre par ordinateur et comprenant les étapes :

- détermination d'une signature observée de l'émetteur radar à partir d'une distribution des écarts temporels entre les instants d'arrivée successifs ;

- pour chaque classe d'émetteurs parmi une pluralité de classes d'émetteurs prédéterminées, chaque classe d'émetteurs étant associée à au moins une signature attendue, calcul d'un score de proximité entre la signature observée et chaque signature attendue associée à ladite classe d'émetteurs, chaque signature attendue étant fonction d'une distribution attendue des écarts temporels entre des instants d'émission successifs pour ladite classe d'émetteurs, et pour un taux de perte d'impulsions prédéterminé ; et

- affectation de l'émetteur radar à la classe d'émetteurs associée à la signature attendue conduisant au meilleur score de proximité.

Figure 9

## Description

La présente invention concerne un procédé d'identification d'un émetteur radar, à partir d'un ensemble d'impulsions reçues correspondantes, chaque impulsion reçue étant associée à un instant d'arrivée respectif.

L'invention concerne également un programme d'ordinateur et un système d'identification configuré pour mettre en oeuvre un tel procédé.

L'invention s'applique au domaine du traitement du signal, en particulier à l'identification d'un émetteur radar à partir d'impulsions correspondantes.

## État de la technique

Un émetteur radar est décrit par les caractéristiques des impulsions qu'il émet : fréquence, durée d'impulsion, niveau, instant d'arrivée, direction d'arrivée, etc. Or, l'évolution des technologies a amené les sources radar à présenter des spectres électromagnétiques plus complexes et plus similaires.

Ceci rend de plus en plus difficile l'identification d'un émetteur radar (c'est-à-dire l'affectation de l'émetteur radar à une classe d'émetteurs respective) depuis lequel des impulsions ont été reçues, en particulier en présence de bruit.

Pour surmonter ce problème, il a été proposé de recourir à des procédés d'analyse de la distribution des écarts temporels entre impulsions successives reçues en provenance d'un émetteur radar, dans la mesure où chaque classe d'émetteurs est associée à une loi de période de répétition des impulsions qui lui est propre.

Néanmoins, de tels procédés d'identification ne donnent pas entière satisfaction.

En effet, toutes les impulsions émises par l'émetteur radar ne sont pas nécessairement détectées au niveau du récepteur (par exemple, du fait d'un rapport signal sur bruit insuffisant), ou ne sont pas assignées audit émetteur radar lors de la mise en oeuvre d'une étape de désentrelacement d'impulsions. Ceci se traduit par des impulsions manquantes dans le signal de détection.

Du fait de ces impulsions manquantes, la distribution des écarts temporels déterminée à partir des impulsions reçues diffère de la distribution attendue, c'est-à-dire une distribution conforme à la loi de période de répétition des impulsions associée à la classe de l'émetteur radar.

Par conséquent, la fiabilité de l'identification de l'émetteur radar est compromise.

Un but de la présente invention est de remédier à au moins un des inconvénients de l'état de la technique.

Un autre but de l'invention est de proposer un procédé d'identification d'un émetteur radar qui soit fiable, même en cas de perte d'impulsions.

Un autre but de l'invention est de proposer un procédé d'identification d'un émetteur radar qui soit simple et peu gourmand en ressources de calcul.

## Exposé de l'invention

À cet effet, l'invention concerne un procédé du type précité, le procédé étant mis en oeuvre par ordinateur et comprenant les étapes :

- détermination d'une signature observée de l'émetteur radar à partir d'une distribution des écarts temporels entre les instants d'arrivée successifs ;
- pour chaque classe d'émetteurs parmi une pluralité de classes d'émetteurs prédéterminées,

    chaque classe d'émetteurs étant associée à au moins une signature attendue,
    calcul d'un score de proximité entre la signature observée et chaque signature attendue associée à ladite classe d'émetteurs,
    chaque signature attendue étant fonction d'une distribution attendue des écarts temporels entre des instants d'émission successifs pour ladite classe d'émetteurs, et pour un taux de perte d'impulsions prédéterminé ; et

- affectation de l'émetteur radar à la classe d'émetteurs associée à la signature attendue conduisant au meilleur score de proximité.

En effet, grâce à la fourniture, pour chaque classe d'émetteurs connue, d'une pluralité de signatures attendues, chacune établie en fonction de la loi de période de répétition des impulsions de ladite classe d'émetteurs, et pour un taux de perte d'impulsions prédéterminé, le phénomène de perte d'impulsions précédemment décrit est pris en compte.

La comparaison de la distribution des écarts temporels des impulsions reçues avec chaque signature attendue pour obtenir un score de proximité conduit à une identification fiable de l'émetteur radar considéré.

En outre, le calcul du score de proximité est peu gourmand en ressources de calcul, de sorte que la mise en oeuvre d'algorithmes complexes, tels que des modèles d'intelligence artificielle, est évitée.

De façon avantageuse, le procédé selon l'invention présente une ou plusieurs des caractéristiques suivantes, prises isolément ou selon toute combinaison techniquement possible :

    pour chaque signature attendue, le score de proximité est fonction d'une distance de transport optimal entre la signature observée et ladite signature attendue, l'émetteur radar étant affecté à la classe d'émetteurs associée à la signature attendue pour laquelle la distance de transport optimal calculée est la plus petite ;

    chaque impulsion reçue est, en outre, associée à une fréquence correspondante, et chaque classe d'émetteurs est associée à au moins une fréquence d'émission, la signature observée dépendant, en outre, de la fréquence de chaque impulsion reçue, et pour chaque classe d'émetteurs, chaque signature attendue dépendant, en outre, de chaque fréquence d'émission correspondante ;

la signature observée est, en outre, fonction d'une distribution des fréquences des impulsions reçues, et pour chaque classe d'émetteurs, et pour chaque taux de perte, la signature attendue correspondante dépendant de la distribution attendue associée, répétée à chaque fréquence d'émission de la classe d'émetteurs ;

chaque impulsion reçue est, en outre, associée à une durée correspondante, et chaque classe d'émetteurs est associée à au moins une durée d'impulsion émise, la signature observée dépendant, en outre, de la durée de chaque impulsion reçue, et pour chaque classe d'émetteurs, chaque signature attendue dépendant, en outre, de chaque durée d'impulsion émise ;

la signature observée est, en outre, fonction d'une distribution des durées des impulsions reçues, et pour chaque classe d'émetteurs, et pour chaque taux de perte, la signature attendue correspondante dépendant de la distribution attendue associée, répétée à chaque durée d'impulsion de la classe d'émetteurs ;

le taux de perte d'impulsions est inférieur à 0,5 ;

pour chaque classe d'émetteurs, et pour chaque taux de perte d'impulsions prédéterminé, la distribution attendue des écarts temporels est régie par la loi :

$$v^{\alpha} = \frac{1}{K} \sum_{n=0}^{\infty} (1-\alpha)\alpha^n \sum_{k=1}^{K} \delta_{t_{nk}}$$

où $v^{\alpha}$ est la distribution attendue,
$\alpha$ est le taux de perte d'impulsions,
K est le nombre de périodes de répétitions associées à la classe d'émetteurs,
$\delta$ est la mesure de Dirac, et
$t_{nk}$ vaut :

$$\sum_{m=k}^{k+n} \pi_{m[K]}$$

où [] est l'opérateur « modulo », destiné à caractériser une relation de congruence entre entiers,

m[K] est le reste de la division euclidienne de m par K, et $\pi_{m[K]}$ est la période de répétition de la classe d'émetteurs dont le rang vaut m[K] ;

pour au moins une classe d'émetteurs, la période de répétition est susceptible de prendre toute valeur dans au moins un intervalle prédéterminé, la distribution attendue des écarts temporels, pour chaque taux de perte d'impulsions prédéterminé, étant régie par la loi :

$$v^{\alpha}(t) = \frac{1}{K} \sum_{n=0}^{\infty} (1-\alpha)\alpha^n \sum_{k=1}^{K} p_{nk}(t)$$

où $v^{\alpha}$ est la distribution attendue,
$\alpha$ est le chaque taux de perte d'impulsions,
K est un nombre de périodes de répétition associé à la classe d'émetteurs, $p_{nk}$ est une densité de probabilité d'une variable gaussienne $T_{nk}$ valant :

$$\sum_{m=k}^{k+n} J_m$$

$J_m$ étant une variable gaussienne représentative de la m-ème période de répétition parmi les K périodes de répétition, d'espérance $\mu_m$ et de variance $\sigma_m^2$ prédéterminées, les variables $J_m$ étant indépendantes.

Selon un autre aspect de l'invention, il est proposé un programme d'ordinateur comprenant des instructions exécutables qui, lorsqu'elles sont exécutées par ordinateur, mettent en oeuvre les étapes du procédé tel que défini ci-dessus.

Le programme d'ordinateur peut être en tout langage informatique, tel que par exemple en langage machine, en C, C++, JAVA, Python, etc.

Selon un autre aspect de l'invention, il est proposé un système d'identification d'un émetteur radar, à partir d'un ensemble d'impulsions reçues correspondantes, chaque impulsion reçue étant associée à un instant d'arrivée respectif, le système d'identification comprenant une unité de traitement configurée pour :

- déterminer une signature observée de l'émetteur radar à partir d'une distribution des écarts temporels entre les instants d'arrivée successifs ;
- pour chaque classe d'émetteurs parmi une pluralité de classes d'émetteurs prédéterminées, chaque classe d'émetteurs étant associée à au moins une signature attendue,

calculer un score de proximité entre la signature observée et chaque signature attendue associée à ladite classe d'émetteurs,

chaque signature attendue étant fonction d'une distribution attendue des écarts temporels entre des instants d'émission successifs pour ladite classe d'émetteurs, et pour un taux de perte d'impulsions prédéterminé ; et

- affecter l'émetteur radar à la classe d'émetteurs associée à la signature attendue conduisant au meilleur score de proximité.

Le système d'identification selon l'invention peut être tout type d'appareil tel qu'un serveur, un ordinateur, une tablette, un calculateur, un processeur, une puce informatique, programmé pour mettre en oeuvre le procédé selon l'invention, par exemple en exécutant le programme d'ordinateur selon l'invention.

**Brève description des figures**

L'invention sera mieux comprise à la lecture de la description qui va suivre, donnée uniquement à titre d'exemple non limitatif et faite en se référant aux dessins annexés sur lesquels :

la figure 1 est une représentation schématique d'un système d'identification selon l'invention ;

la figure 2 est un ordinogramme d'un procédé d'identification selon l'invention, mis en oeuvre par le système de la figure 1 ;

la figure 3 est un graphe représentant des impulsions attendues pour une première classe d'émetteurs, en fonction de leur fréquence et de leur instant d'émission ;

la figure 4 est un graphe représentant des impulsions attendues pour la première classe d'émetteurs, en fonction de leur durée et de leur instant d'émission ;

la figure 5 est un graphe représentant des impulsions attendues pour une deuxième classe d'émetteurs, en fonction de leur fréquence et de leur instant d'émission ;

la figure 6 est un graphe représentant des impulsions attendues pour la deuxième classe d'émetteurs, en fonction de leur durée et de leur instant d'émission ;

les figures 7A à 7F sont des graphes représentant chacun une distribution attendue des écarts temporels entre impulsions reçues depuis un émetteur radar de la première classe, pour plusieurs valeurs de taux de perte d'impulsions ;

les figures 8A à 8F sont des graphes représentant chacun une distribution attendue des écarts temporels entre impulsions reçues depuis un émetteur radar de la deuxième classe, pour plusieurs valeurs de taux de perte d'impulsions ;

la figure 9 est un graphe représentant une signature observée d'un émetteur radar à identifier ;

la figure 10 est un graphe représentant une variante de signature observée de l'émetteur radar à identifier de la figure 9 ; et

la figure 11 est un graphe représentant une variante d'une signature attendue.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

**Description détaillée**

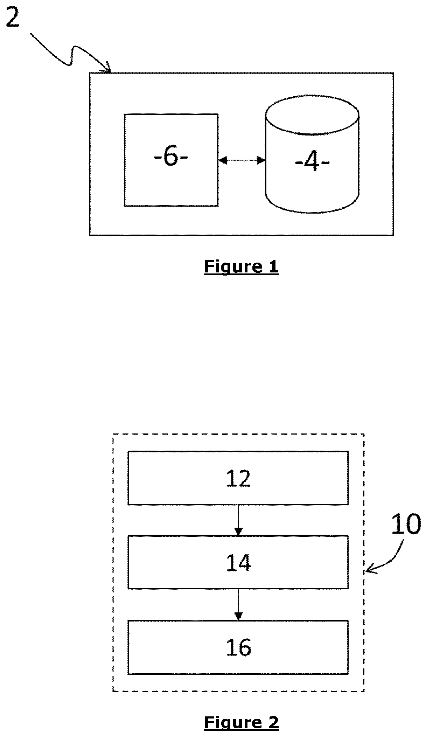

Un dispositif 2 d'identification d'émetteur radar selon l'invention est illustré par la figure 1.

Le dispositif d'identification 2 est destiné à identifier un émetteur radar à partir d'un ensemble d'impulsions radar détectées correspondantes (par la suite appelé « groupe d'impulsions »).

Par « identifier un émetteur radar », il est entendu, au sens de la présente invention, affecter ledit émetteur radar à une classe d'émetteurs correspondante parmi une pluralité de classes d'émetteurs connues.

Pour chaque groupe d'impulsions, les impulsions radar correspondantes (par la suite simplement appelées « impulsions ») ont été préalablement reçues par un récepteur et ont, par exemple, subi un désentrelacement au cours duquel les impulsions issues d'un même émetteur radar ont été réunies dans un même groupe. En d'autres termes, il a été préalablement déterminé que les impulsions d'un même groupe d'impulsions proviennent idéalement toutes d'un même émetteur radar.

Le dispositif d'identification 2 comprend une mémoire 4 et une unité de traitement 6 reliées entre elle.

Le dispositif d'identification 2 est susceptible de se présenter sous une forme matérielle, telle qu'un ordinateur, un serveur, un processeur, une puce électronique, etc. Alternativement, ou de façon additionnelle, le dispositif d'identification 2 est susceptible de se présenter sous une forme logicielle telle qu'un programme d'ordinateur, ou une application, par exemple une application pour un appareil utilisateur de type tablette ou smartphone.

**Mémoire**

La mémoire 4 est configurée pour stocker, pour chaque impulsion détectée, un instant d'arrivée respectif.

Par exemple, pour chaque impulsion détectée, l'instant d'arrivée respectif a été préalablement obtenu au moyen d'un étage de prétraitement configuré pour détecter et horodater chaque impulsion reçue par le récepteur.

De préférence, la mémoire 4 est également configurée pour stocker, pour chaque impulsion reçue, une fréquence et une durée respectives.

Par exemple, pour chaque impulsion, la fréquence et la durée correspondantes ont été préalablement obtenues au moyen de l'étage de prétraitement, également configuré pour déterminer lesdites caractéristiques pour chaque impulsion détectée.

La mémoire 4 est également configurée pour stocker, pour chaque classe d'émetteurs connue, au moins une distribution attendue des écarts temporels (dite « distribution attendue », et notée $v^\alpha$), chacune associée à un taux d'impulsions perdues (ou « taux de perte ») respectif.

Par « taux de perte », il est entendu, au sens de la présente invention, la fraction des impulsions émises par l'émetteur radar qui ne sont pas détectées.

En outre, la mémoire 4 est également configurée pour stocker, pour chaque classe d'émetteurs connue, au moins une signature attendue correspondante.

**Unité de traitement**

L'unité de traitement 6 est une unité de traitement matérielle, telle qu'un processeur, une puce électronique, un calculateur, un ordinateur, un serveur, etc. Alternativement, ou de façon additionnelle, l'unité de traitement 6 est une unité de traitement logicielle, telle qu'une application, un programme d'ordinateur, une machine virtuelle, etc.

L'unité de traitement 6 est configurée pour mettre en oeuvre un procédé d'identification 10 (figure 2), afin d'affecter l'émetteur radar à la classe d'émetteurs correspondante, à partir du groupe d'impulsions associé.

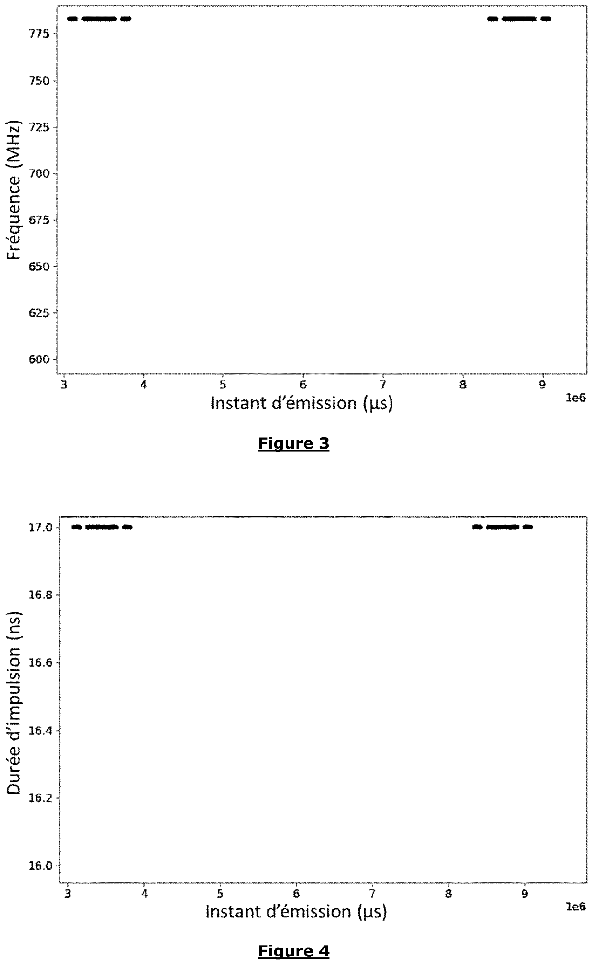

La mise en oeuvre du procédé d'identification 10 selon l'invention va être décrite en référence à l'exemple des figures 3 à 9.

Dans cet exemple, donné à titre illustratif, il existe deux classes d'émetteurs connues distinctes, dites « première classe » et « deuxième classe » respectivement.

La figure 3 illustre un exemple d'impulsions attendues pour la première classe d'émetteurs, représentées en fonction de leur fréquence et de leur instant d'émission. Sur la figure 4, ces impulsions sont représentées en fonction de leur durée et de leur instant d'émission.

Comme cela ressort des figures 3 et 4, un émetteur radar appartenant à la première classe est configuré pour émettre des impulsions présentant une durée de 17 ns (nanoseconde), à une unique fréquence de 790 MHz (mégahertz).

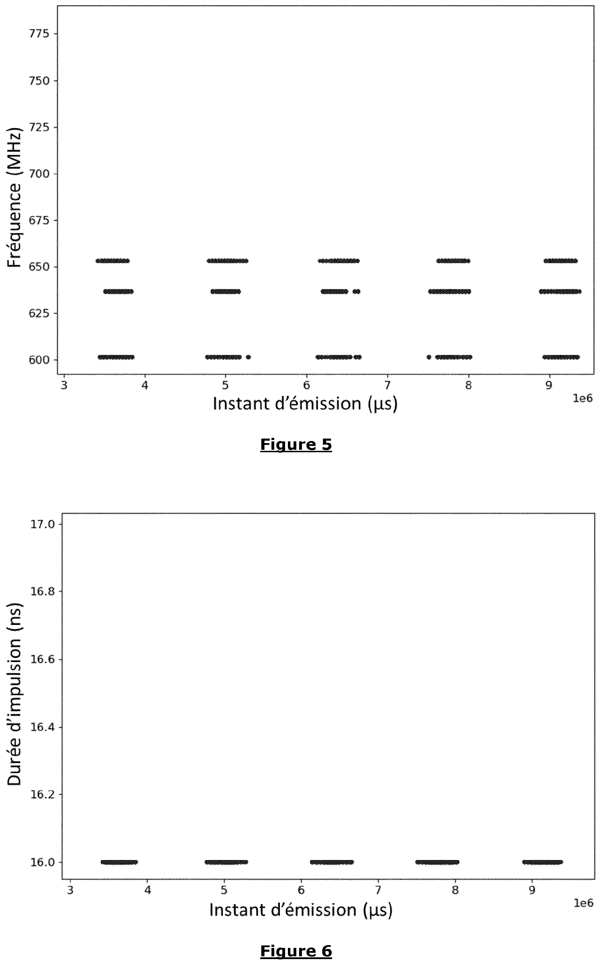

La figure 5 illustre un exemple d'impulsions attendues pour la deuxième classe d'émetteurs, représentées en fonction de leur fréquence et de leur instant d'émission. Sur la figure 6, ces impulsions sont représentées en fonction de leur durée et de leur instant d'émission.

Comme cela ressort des figures 5 et 6, un émetteur appartenant à la deuxième classe est configuré pour émettre des impulsions présentant une durée de 16 ns, à trois fréquences distinctes : 600 MHz, 635 MHz et 655 MHz.

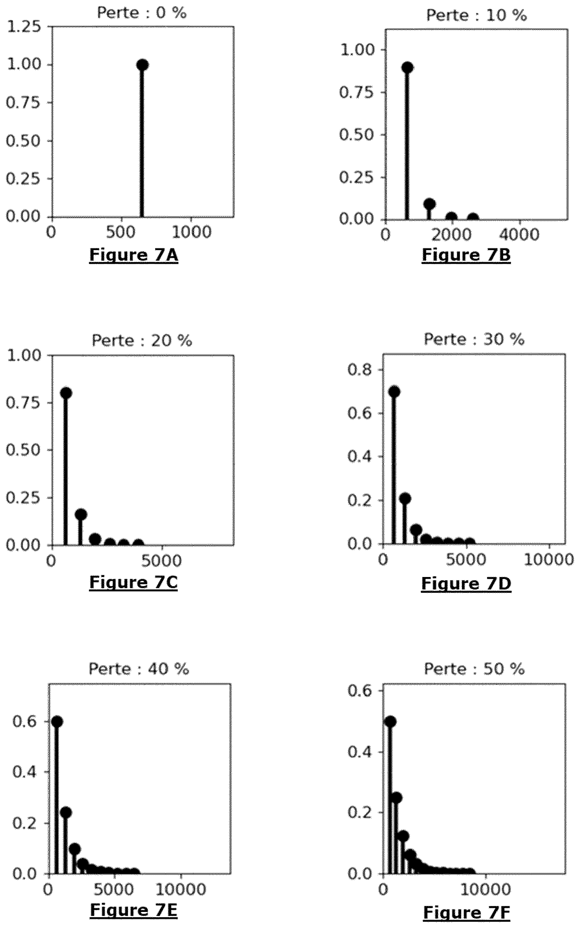

Sur la figure 7A est représentée la loi de période de répétition pour la première classe, c'est-à-dire la loi régissant la période de répétition des émetteurs radar de la première classe.

Par « période de répétition », il est entendu, au sens de la présente invention, un écart temporel entre les instants d'émission de deux impulsions successives.

Une telle loi de période de répétition est représentée au moyen d'un histogramme illustrant la distribution des périodes de répétition pour un émetteur radar de la première classe, c'est-à-dire un histogramme représentatif de la proportion suivant laquelle chaque période de répétition est mise en oeuvre pour l'émission d'impulsions radar par ledit émetteur radar.

Comme cela ressort de la figure 7A, un émetteur radar appartenant à la première classe est configuré pour émettre des impulsions suivant une unique période de répétition, à savoir 650 μs (microseconde).

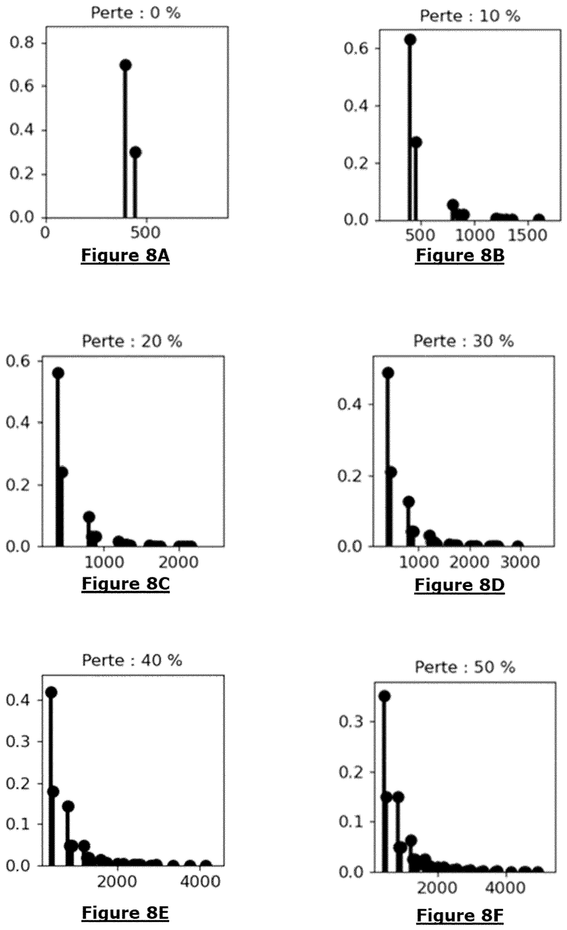

En outre, sur la figure 8A est représentée la loi de période de répétition associée à la deuxième classe.

Comme illustré par la figure 8A, un émetteur radar appartenant à la deuxième classe est configuré pour émettre des impulsions suivant deux périodes de répétition : 400 μs et 450 μs.

Il apparaît, en outre, sur cette figure 8A, que, pour un émetteur radar appartenant à la deuxième classe, les périodes de répétition correspondantes sont mises en oeuvre dans les proportions suivantes :

- 400 μs : 70% ; et
- 450 μs : 30%.

En d'autres termes, dans 70% des cas, deux impulsions successives sont séparées d'un intervalle temporel de 400 μs, et, dans 30% des cas, deux impulsions successives sont séparées d'un intervalle temporel de 450 μs.

Evidemment, d'autres répartitions sont envisageables. En outre, pour une classe d'émetteurs donnée, une ou plusieurs périodes de répétitions sont susceptibles de présenter la même proportion.

Comme indiqué précédemment, chaque classe d'émetteurs est associée à au moins une distribution attendue $v^a$ correspondant à un taux de perte $\alpha$ respectif.

Plus précisément, pour chaque classe d'émetteurs, et pour chaque taux de perte a, la distribution attendue $v^a$ correspondante est régie par la loi :

$$v^a = \frac{1}{K} \sum_{n=0}^{\infty} (1-a)a^n \sum_{k=1}^{K} \delta_{t_{nk}}$$

où K est le nombre de périodes de répétitions associées à la classe d'émetteurs,
$\delta$ est la mesure de Dirac, et
$t_{nk}$ vaut :

$$\sum_{m=k}^{k+n} \pi_{m[K]}$$

où [] est l'opérateur « modulo », destiné à caractériser une relation de congruence entre entiers,
m[K] est le reste de la division euclidienne de m par K, et $\pi_{m[K]}$ est la période de répétition de la classe d'émetteurs dont le rang vaut m[K].

En particulier, les figures 7A et 8A correspondent à une distribution attendue $v^a$ pour un taux de perte $\alpha$ nul, c'est-à-dire quand toutes les impulsions émises par l'émetteur radar sont détectées.

En outre, une pluralité de distributions attendues $v^a$ sont représentées sur les figures 7B à 7F pour la première classe, et sur les figures 8B à 8F pour la deuxième classe. Les figures 7B à 7F correspondent à des taux de perte de 10%, 20%, 30%, 40% et 50% respectivement ; il en va de même pour les figures 8B à 8F.

Il est avantageux d'associer, à chaque classe d'émetteurs, une pluralité de distributions attendues $v^a$, chacune correspondant à un taux de perte $\alpha$ respectif. En effet, une telle caractéristique autorise la prise en compte de situations dans lesquelles toutes les impulsions émises par un émetteur radar correspondant ne sont pas détectées. Ceci se traduit par un écart constaté entre deux impulsions successives qui diffère des périodes de répétition théoriques pour ladite classe d'émetteurs. Dans ce cas, la distribution observée des écarts temporels entre les instants d'arrivée successifs des impulsions émises par un émetteur radar de ladite classe d'émetteurs comprend, outre les pics à une abscisse égale à l'une des périodes de répétition théoriques pour ladite classe d'émetteurs, des pics présentant chacun une abscisse égale à un multiple entier de l'une des périodes de répétition théoriques.

Avantageusement, pour chaque distribution attendue $v^a$, le taux de perte $\alpha$ est inférieur ou égal à 0,5. Une telle valeur correspond à une situation dans laquelle une impulsion émise par l'émetteur radar sur deux n'est pas détectée.

Un tel seuil est avantageux, dans la mesure où un taux de perte supérieur à 50% ne permet par d'extraire d'informations significatives en vue de l'identification de l'émetteur radar. En outre, les distributions attendues $v^a$ pour un taux de perte $\alpha$ supérieur à 0,5 tendent à être très similaires. Bien évidemment, un tel seuil n'est pas limitatif.

De préférence, pour chaque classe d'émetteurs, chaque signature attendue est une distribution attendue $v^a$ correspondant à un taux de perte $\alpha$ respectif.

Comme indiqué précédemment, l'unité de traitement 6 est configurée pour mettre en oeuvre le procédé d'identification 10, afin d'affecter l'émetteur radar à la classe d'émetteurs correspondante, à partir du groupe d'impulsions associé audit émetteur radar.

Pour exécuter le procédé d'identification 10, l'unité de traitement 6 est configurée pour mettre en oeuvre les étapes :

- détermination 12 d'une signature observée de l'émetteur radar ;
- calcul 14 d'un score de proximité ; et
- affectation 16 de l'émetteur à une classe d'émetteurs.

*Détermination de la signature observée de l'émetteur radar*

L'unité de traitement 6 est configurée pour déterminer, au cours de l'étape de détermination 12, une signature observée de l'émetteur radar à identifier, à partir du groupe d'impulsions associé à l'émetteur radar.

Plus précisément, pour chaque impulsion du groupe d'impulsions issues de l'émetteur radar à identifier, l'unité de traitement 6 est configurée pour associer une première valeur égale à l'écart temporel entre l'instant d'arrivée de ladite impulsion et l'instant d'arrivée de l'impulsion suivante.

En outre, l'unité de traitement 6 est configurée pour déterminer la signature observée comme étant une distribution des premières valeurs.

En d'autres termes, la signature observée est la distribution des écarts temporels entres impulsions successives associées à l'émetteur radar à identifier.

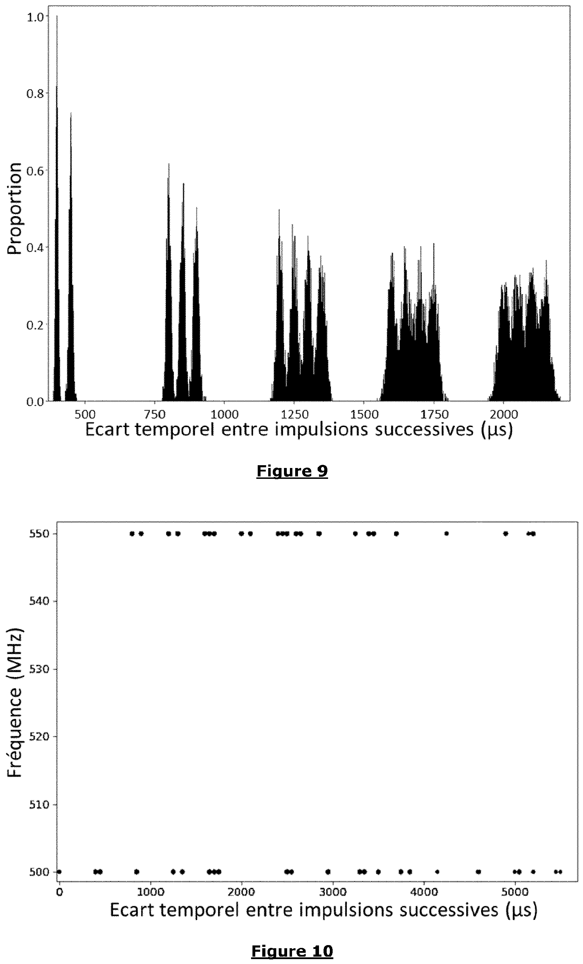

Un exemple de distribution observée pour un émetteur radar à identifier est illustré par la figure 9 (la figure ayant été normalisée).

*Calcul du score de proximité*

L'unité de traitement 6 est également configurée pour, au cours de l'étape de calcul 14, calculer un score de proximité entre la signature observée et chaque signature attendue stockée dans la mémoire 4, chaque signature attendue étant associée à un taux de perte d'impulsions $\alpha$ prédéterminé respectif.

Plus précisément, l'unité de traitement 6 est configurée pour calculer un score de proximité entre la signature observée et chaque signature attendue pour chaque classe d'émetteurs, au regard d'une métrique prédéterminée.

Il en résulte que, à l'issue de l'étape de calcul 14, le nombre de scores de proximité calculés est égal au nombre de signatures attendues stockées dans la mémoire 4.

Avantageusement, pour chaque signature attendue, le score de proximité correspondant est fonction d'une distance de transport optimal entre la signature observée et ladite signature attendue.

Par « distance de transport optimal », il est entendu, au sens de la présente invention, une valeur représentative du coût pour transformer une distribution en une autre, c'est-à-dire pour déplacer les points d'une distribution vers une autre.

Par exemple, le score de proximité est égal à la distance de transport optimal entre la signature observée et la signature attendue.

Le recours à la distance de transport optimal est avantageux en raison de sa vitesse de calcul, dans la mesure où il autorise une comparaison aisée entre distributions, notamment celles présentant des supports disjoints, qui rendent les distances classiques inutilisables.

Dans l'exemple illustratif des figures 3 à 9, il apparaît que les distributions des figures 8C et 9 sont très similaires. Notamment, la distribution observée pour l'émetteur à identifier et la distribution attendue de la figure 8C présentent des pics aux mêmes écarts temporels entre impulsions, ce qui traduit le fait que l'émetteur radar à identifier appartient vraisemblablement à la deuxième classe d'émetteurs. La distance de transport optimal entre la signature observée et la signature attendue correspondant à la deuxième classe est donc faible. À l'inverse, il apparaît que la distribution de la figure 9 présente très peu de similarités avec les distributions des figures 7A à 7F, et le coût pour transformer la distribution observée en l'une quelconque des distributions attendues 7A à 7F est plus élevé que précédemment.

*Affectation de l'émetteur à une classe d'émetteurs*

L'unité de traitement 6 est également configurée pour, au cours de l'étape d'affectation 16, affecter l'émetteur radar à une classe d'émetteurs, sur la base du score de proximité calculé.

Plus précisément, l'unité de traitement 6 est configurée pour affecter l'émetteur radar à la classe d'émetteurs qui est associée à la signature attendue conduisant au meilleur score de proximité.

En particulier, dans le cas où le score calculé dépend de la distance de transport optimal, l'unité de traitement 6 est configurée pour affecter l'émetteur radar à la classe d'émetteurs qui est associée à la signature attendue pour laquelle la distance de transport optimal calculée est la plus petite.

Dans l'exemple précédent, l'unité de traitement 6 affecte l'émetteur radar à identifier à la deuxième classe.

Avantageusement, l'unité de traitement 6 est configurée pour affecter l'émetteur radar à la classe d'émetteurs qui est associée à la signature attendue conduisant au meilleur score de proximité, à condition que la valeur dudit meilleur score de proximité appartienne à un intervalle prédéterminé.

En particulier, dans le cas où le score calculé dépend de la distance de transport optimal, l'unité de traitement 6 est configurée pour affecter l'émetteur radar à la classe d'émetteurs qui est associée à la signature attendue pour laquelle la distance de transport optimal calculée est la plus petite, à condition que la distance de transport optimal calculée soit inférieure à une distance maximale prédéterminée.

Ceci est avantageux, dans la mesure où une telle caractéristique évite qu'un émetteur radar appartenant à une classe d'émetteurs qui n'est pas répertoriée dans la mémoire 4 soit affecté, de façon erronée, à une classe d'émetteurs connue.

En outre, l'unité de traitement 6 est, de préférence, configurée pour émettre une alerte indicative de l'observation d'un émetteur radar appartenant à une classe d'émetteurs non répertoriée, dans le cas où la valeur du meilleur score de proximité est en dehors de l'intervalle prédéterminé.

*Dépendance de la signature attendue en fréquence et/ou en durée d'impulsion*

De façon optionnelle, l'unité de traitement 6 est également configurée pour associer, au cours de l'étape de détermination 12, une deuxième valeur à chaque impulsion du groupe d'impulsions issues de l'émetteur radar à identifier, outre la première valeur.

En particulier, pour chaque impulsion du groupe d'impulsions, la deuxième valeur est égale à la fréquence correspondante.

Dans ce cas, l'unité de traitement 6 est configurée pour déterminer la signature observée comme étant une distribution bidimensionnelle, à la fois des premières valeurs et des deuxièmes valeurs. Un exemple d'une telle signature observée est illustré par la figure 10 : dans cet exemple, l'émetteur radar est configuré pour émettre des impulsions présentant une fréquence égale à 500 Mhz ou 550 MHz, avec une période de répétition égale à 400 $\mu$s ou 450 $\mu$s (suivant des proportions valant 70% et 30% respectivement). En outre, dans cet exemple, le taux de perte est estimé à 20%.

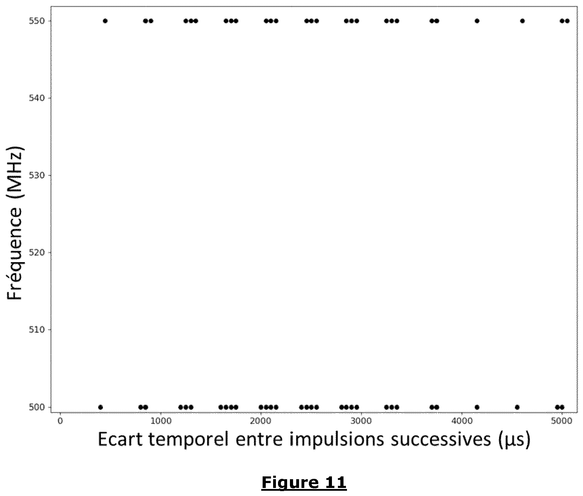

En outre, dans ce cas, pour chaque classe d'émetteurs, et pour chaque taux de perte a, la signature attendue correspondante est une signature à deux dimensions, dans laquelle la distribution attendue $v^\alpha$ est répétée à chaque fréquence d'émission de la classe d'émetteurs. Un exemple d'une telle signature attendue est illustré par la figure 11 : dans cet exemple, les émetteurs radar de la classe d'émetteurs considérée sont configurés pour émettre des impulsions présentant une fréquence égale à 500 Mhz ou 550 MHz, avec une période de répétition égale à 400 $\mu$s ou 450 $\mu$s (suivant des proportions valant 70% et 30% respectivement). En outre, dans cet exemple, le taux de perte $\alpha$ est pris égal à 20%.

Selon une autre variante, l'unité de traitement 6 est également configurée pour associer, au cours de l'étape de détermination 12, une troisième valeur à chaque impulsion du groupe d'impulsions issues de l'émetteur radar à identifier, outre la première valeur et la deuxième valeur.

En particulier, pour chaque impulsion du groupe d'impulsions, la troisième valeur est égale à la durée correspondante.

Dans ce cas, l'unité de traitement 6 est configurée pour déterminer la signature observée comme étant une distribution tridimensionnelle, à la fois des premières valeurs, des deuxièmes valeurs et des troisièmes valeurs.

En outre, dans ce cas, pour chaque classe d'émetteurs, et pour chaque taux de perte a, la signature attendue correspondante est une signature à trois dimensions, dans laquelle la distribution attendue $v^\alpha$ est répétée à chaque fréquence d'émission et à chaque durée d'impulsion de la classe d'émetteurs.

D'une façon plus générale, pour chaque classe d'émetteurs, et pour chaque taux de perte a, la signature attendue correspondante est une signature susceptible de présenter plus trois dimensions. Dans ce cas, l'une desdites dimensions est associée à la première valeur précédemment décrite, à savoir l'écart temporel entre les instants d'arrivée de deux impulsions successives.

En variante, les rôles de la fréquence et de la durée d'impulsion sont inversés.

### Cas d'une loi de période de répétition aléatoire

Pour certaines classes d'émetteurs, la loi de période de répétition correspondante est aléatoire. Ceci signifie que l'écart temporel entre deux impulsions successives est susceptible de prendre toute valeur dans au moins un intervalle I prédéterminé.

Dans ce cas, pour chaque taux de perte a, la distribution attendue $v^\alpha$ correspondante, stockée dans la mémoire 4, est régie par la loi :

$$v^a(t) = \frac{1}{K} \sum_{n=0}^{\infty} (1-a)a^n \sum_{k=1}^{K} p_{nk}(t)$$

où K est un nombre de périodes de répétition associé à la classe d'émetteurs considérée (généralement choisi par l'utilisateur dans le cas d'une loi de période de répétition aléatoire),

$p_{nk}$ est une densité de probabilité d'une variable gaussienne $T_{nk}$ valant :

$$\sum_{m=k}^{k+n} J_m$$

$J_m$ étant une variable gaussienne représentative de la m-ème période de répétition parmi les K périodes de répétition, d'espérance $\mu_m$ et de variance $\sigma_m^2$, $\mu_m$ et $\sigma_m^2$ étant chacune une valeur choisie par l'utilisateur, les variables $J_m$ étant indépendantes.

De préférence, chaque période de répétition parmi les K périodes de répétition est associée à un intervalle I correspondant. Dans ce cas, chaque valeur $\mu_m$ est choisie dans l'intervalle I associé à la période de répétition m. En outre, chaque valeur $\sigma_m^2$ est fonction de la longueur de l'intervalle I associé à la période de répétition m.

En variante, des variables régies par une distribution distincte d'une distribution gaussienne sont susceptibles d'être mises en oeuvre.

### Fonctionnement

Le fonctionnement du dispositif d'identification 2 va maintenant être décrit, en référence à la figure 2.

Au cours d'une étape d'initialisation (non représentée), l'instant d'arrivée correspondant à chaque impulsion du groupe d'impulsions associé à l'émetteur radar à identifier est écrit dans la mémoire 4.

De préférence, pour chaque impulsion reçue, une fréquence et une durée respectives sont également écrites dans la mémoire 4.

En outre, pour chaque classe d'émetteurs connue, une pluralité de signatures attendues, chacune associée à un taux de perte respectif, sont écrites dans la mémoire 4.

Puis, au cours de l'étape de détermination 12, l'unité de traitement 6 calcule la distribution observée à partir des instants d'arrivée des impulsions du groupe d'impulsions correspondant à l'émetteur radar à identifier.

Puis, l'unité de traitement 6 détermine la signature observée de l'émetteur radar à identifier, à partir de la distribution observée calculée.

Puis, au cours de l'étape de calcul 14, l'unité de traitement 6 calcule le score de proximité entre la signature observée et chaque signature attendue stockée dans la mémoire 4. En particulier, l'unité de traitement 6 calcule la distance de transport optimal entre la signature observée et chaque signature attendue stockée dans la mémoire 4.

Puis, au cours de l'étape d'affectation 16, l'unité de traitement 6 affecte l'émetteur radar à identifier à la classe d'émetteurs qui est associée à la signature attendue conduisant au meilleur score de proximité.

Bien entendu, l'invention n'est pas limitée aux exemples qui viennent d'être décrits.

**Revendications**

1. Procédé d'identification d'un émetteur radar, à partir d'un ensemble d'impulsions reçues correspondantes, chaque impulsion reçue étant associée à un instant d'arrivée respectif,

   le procédé étant mis en oeuvre par ordinateur et comprenant les étapes :

   - détermination (12) d'une signature observée de l'émetteur radar à partir d'une distribution des écarts temporels entre les instants d'arrivée successifs ;
   - pour chaque classe d'émetteurs parmi une pluralité de classes d'émetteurs prédéterminées,

     chaque classe d'émetteurs étant associée à au moins une signature attendue, calcul (14) d'un score de proximité entre la signature observée et chaque signature attendue associée à ladite classe d'émetteurs, chaque signature attendue étant fonction d'une distribution attendue des écarts temporels entre des instants d'émission successifs pour ladite classe d'émetteurs, et pour un taux de perte d'impulsions prédéterminé ; et

     - affectation (16) de l'émetteur radar à la classe d'émetteurs associée à la signature attendue conduisant au meilleur score de proximité.

2. Procédé selon la revendication 1, dans lequel, pour chaque signature attendue, le score de proximité est fonction d'une distance de transport optimal entre la signature observée et ladite signature attendue, l'émetteur radar étant affecté à la classe d'émetteurs associée à la signature attendue pour laquelle la distance de transport optimal calculée est la plus petite.

3. Procédé selon la revendication 1 ou 2, dans lequel chaque impulsion reçue est, en outre, associée à une fréquence correspondante, et chaque classe d'émetteurs est associée à au moins une fréquence d'émission,

   la signature observée dépendant, en outre, de la fréquence de chaque impulsion reçue, et pour chaque classe d'émetteurs, chaque signature attendue dépendant, en outre, de chaque fréquence d'émission correspondante.

4. Procédé selon la revendication 3, dans lequel la signature observée est, en outre, fonction d'une distribution des fréquences des impulsions reçues, et pour chaque classe d'émetteurs, et pour chaque taux de perte, la signature attendue correspondante dépendant de la distribution attendue associée, répétée à chaque fréquence d'émission de la classe d'émetteurs.

5. Procédé selon l'une quelconque des revendications 1 à 4, dans lequel chaque impulsion reçue est, en outre, associée à une durée correspondante, et chaque classe d'émetteurs est associée à au moins une durée d'impulsion émise,

   la signature observée dépendant, en outre, de la durée de chaque impulsion reçue, et pour chaque classe d'émetteurs, chaque signature attendue dépendant, en outre, de chaque durée d'impulsion émise.

6. Procédé selon la revendication 5, dans lequel la signature observée est, en outre, fonction d'une distribution des durées des impulsions reçues, et pour chaque classe d'émetteurs, et pour chaque taux de perte, la signature attendue correspondante dépendant de la distribution attendue associée, répétée à chaque durée d'impulsion de la classe d'émetteurs.

7. Procédé selon l'une quelconque des revendications 1 à 6, dans lequel le taux de perte d'impulsions est inférieur à 0,5.

8. Procédé selon l'une quelconque des revendications 1 à 7, dans lequel, pour chaque classe d'émetteurs, et pour chaque taux de perte d'impulsions prédéterminé, la distribution attendue des écarts temporels est régie par la loi :

$$v^{\alpha} = \frac{1}{K} \sum_{n=0}^{\infty} (1-\alpha)\alpha^n \sum_{k=1}^{K} \delta_{t_{nk}}$$

où $v^{\alpha}$ est la distribution attendue,
$\alpha$ est le taux de perte d'impulsions,
K est le nombre de périodes de répétitions associées à la classe d'émetteurs,
$\delta$ est la mesure de Dirac, et

$t_{nk}$ vaut :

$$\sum_{m=k}^{k+n} \pi_{m[K]}$$

où [] est l'opérateur « modulo », destiné à caractériser une relation de congruence entre entiers,
m[K] est le reste de la division euclidienne de m par K, et
$\pi_{m[K]}$ est la période de répétition de la classe d'émetteurs dont le rang vaut m[K].

9. Procédé selon l'une quelconque des revendications 1 à 8, dans lequel, pour au moins une classe d'émetteurs, la période de répétition est susceptible de prendre toute valeur dans au moins un intervalle prédéterminé,
la distribution attendue des écarts temporels, pour chaque taux de perte d'impulsions prédéterminé, étant régie par la loi :

$$v^{\alpha}(t) = \frac{1}{K} \sum_{n=0}^{\infty} (1-\alpha)\alpha^n \sum_{k=1}^{K} p_{nk}(t)$$

où $v^{\alpha}$ est la distribution attendue,
$\alpha$ est le chaque taux de perte d'impulsions,
K est un nombre de périodes de répétition associé à la classe d'émetteurs, $p_{nk}$ est une densité de probabilité d'une variable gaussienne $T_{nk}$ valant :

$$\sum_{m=k}^{k+n} J_m$$

$J_m$ étant une variable gaussienne représentative de la m-ème période de répétition parmi les K périodes de répétition, d'espérance $\mu_m$ et de variance $\sigma_m^2$ prédéterminées, les variables $J_m$ étant indépendantes.

10. Programme d'ordinateur comprenant des instructions exécutables qui, lorsqu'elles sont exécutées par ordinateur, mettent en oeuvre les étapes du procédé selon l'une quelconque des revendications 1 à 9.

11. Système (2) d'identification d'un émetteur radar, à partir d'un ensemble d'impulsions reçues correspondantes, chaque impulsion reçue étant associée à un instant d'arrivée respectif, le système d'identification (2) comprenant une unité de traitement (6) configurée pour :

- déterminer (12) une signature observée de l'émetteur radar à partir d'une distribution des écarts temporels entre les instants d'arrivée successifs ;
- pour chaque classe d'émetteurs parmi une pluralité de classes d'émetteurs prédéterminées, chaque classe d'émetteurs étant associée à au moins une signature attendue,
calculer (14) un score de proximité entre la signature observée et chaque signature attendue associée à ladite classe d'émetteurs, chaque signature attendue étant fonction d'une distribution attendue des écarts temporels entre des instants d'émission successifs pour ladite classe d'émetteurs, et pour un taux de perte d'impulsions prédéterminé ; et
- affecter (16) l'émetteur radar à la classe d'émetteurs associée à la signature attendue conduisant au meilleur score de proximité.

2

**Figure 1**

**Figure 2**

**Figure 3**

**Figure 4**

**Figure 5**

**Figure 6**

Perte : 0 %

**Figure 7A**

Perte : 10 %

**Figure 7B**

Perte : 20 %

**Figure 7C**

Perte : 30 %

**Figure 7D**

Perte : 40 %

**Figure 7E**

Perte : 50 %

**Figure 7F**

Perte : 0 %

**Figure 8A**

Perte : 10 %

**Figure 8B**

Perte : 20 %

**Figure 8C**

Perte : 30 %

**Figure 8D**

Perte : 40 %

**Figure 8E**

Perte : 50 %

**Figure 8F**

**Figure 9**

**Figure 10**

**Figure 11**

Europäisches
Patentamt

European
Patent Office

Office européen
des brevets

# RAPPORT DE RECHERCHE EUROPEENNE

Numéro de la demande

**EP 23 30 5384**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | MOTTIER MANON ET AL: "RADAR Emitter Classification with Optimal Transport Distances", 2022 30TH EUROPEAN SIGNAL PROCESSING CONFERENCE (EUSIPCO), EUSIPCO, 29 août 2022 (2022-08-29), pages 1871-1875, XP034208212, [extrait le 2022-10-18] * page 1871, colonne de droite, lignes 17-24 * * page 1872, colonne de gauche, lignes 3-7 * * page 1872, colonne de droite, ligne 19 – page 1873, colonne de gauche, ligne 6 * * page 1874, colonne de gauche, lignes 1-11 * * page 1875, colonne de gauche, ligne 19 – colonne de droite, ligne 8 * ----- | 1-11 | INV. G01S7/02 G01S7/292 |
| A | AHMADI M ET AL: "A New Method for Recognizing Pulse Repetition Interval Modulation", 2009 INTERNATIONAL CONFERENCE ON SIGNAL PROCESSING SYSTEMS, IEEE, PISCATAWAY, NJ, USA, 15 mai 2009 (2009-05-15), pages 146-151, XP031491181, ISBN: 978-0-7695-3654-5 * figures 3, 5 * * page 149, colonne de gauche, lignes 25-37 * ----- -/-- | 1-11 | DOMAINES TECHNIQUES RECHERCHES (IPC) G01S |

Le présent rapport a été établi pour toutes les revendications

| Lieu de la recherche | Date d'achèvement de la recherche | Examinateur |
|---|---|---|
| Munich | 31 juillet 2023 | Rodríguez González |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................................................
& : membre de la même famille, document correspondant

EPO FORM 1503 03.82 (P04C02)

**page 1 de 2**

Europäisches
Patentamt

European
Patent Office

Office européen
des brevets

**RAPPORT DE RECHERCHE EUROPEENNE**

Numéro de la demande

**EP 23 30 5384**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | HA NGUYEN P K ET AL: "Classification of Pulse Repetition Interval Modulations Using Neural Networks", 2018 IEEE SYMPOSIUM SERIES ON COMPUTATIONAL INTELLIGENCE (SSCI), IEEE, 18 novembre 2018 (2018-11-18), pages 1739-1743, XP033509860, DOI: 10.1109/SSCI.2018.8628913 [extrait le 2019-01-28] * figure 2 * * page 1739, colonne de gauche, lignes 7-9 * * page 1739, colonne de gauche, lignes 32-45 * | 1-11 | |
| A | MIN XIE ET AL: "A novel method for deinterleaving radar signals: First-order difference curve based on sorted TOA difference sequence", IET SIGNAL PROCESSING, THE INSTITUTION OF ENGINEERING AND TECHNOLOGY, MICHAEL FARADAY HOUSE, SIX HILLS WAY, STEVENAGE, HERTS. SG1 2AY, UK, vol. 17, no. 1, 28 septembre 2022 (2022-09-28), XP006117516, ISSN: 1751-9675, DOI: 10.1049/SIL2.12162 * page 3, colonne de gauche, lignes 18-20 * * page 4, colonne de gauche, lignes 1-8 * * page 4, colonne de droite, ligne 21 - page 5, colonne de gauche, ligne 2 * * page 6, colonne de droite, lignes 21-34 * | 1-11 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Munich | 31 juillet 2023 | Rodríguez González |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)